# FASCICULE DE BREVET EUROPEEN

(11) **EP 0 965 276 B1**
(45) Date de publication et mention de la délivrance du brevet: **12.05.2004**
(21) Numéro de dépôt: 99401377.9
(22) Date de dépôt: 09.06.1999
(51) Int. Cl.: A23G 3/28, A23G 3/20, A23G 1/00, A23G 3/00

(54) **Procédé de fabrication d'un produit alimentaire présentant un motif décoratif**
Verfahren zur Herstellung von Lebensmittelnmit einem dekorativen Muster
Method of production of a food product having a design decoration

(30) Priorité: 15.06.1998 FR 9807516
(43) Date de publication de la demande: 22.12.1999
(73) Titulaire: LU France, 91130 Ris Orangis (FR)
(72) Inventeur: Legrand, Annabelle, 2500 Lier (BE)
(74) Mandataire: Jacquard, Philippe Jean-Luc

(56) Documents cités:
- EP-A- 0 321 188
- EP-A- 0 739 957
- WO-A-97/42832
- DE-A- 3 416 899
- FR-A- 2 686 224
- DATABASE WPI Section Ch, Week 8131 Derwent Publications Ltd., London, GB; Class D13, AN 81-55177D XP002089654 & DD 147 996 A (HUBNER E), 6 mai 1981 (1981-05-06)
- PATENT ABSTRACTS OF JAPAN vol. 096, no. 003, 29 mars 1996 (1996-03-29) & JP 07 289166 A (TANIGUCHI:KK), 7 novembre 1995 (1995-11-07)
- PATENT ABSTRACTS OF JAPAN vol. 006, no. 223 (C-133), 9 novembre 1982 (1982-11-09) & JP 57 125657 A (MORINAGA MASHIINARII KK), 5 août 1982 (1982-08-05)

## Description

La présente invention a pour objet un procédé de fabrication d'un produit alimentaire, par exemple un biscuit chocolaté, qui présente au moins une région de surface à base de matière grasse et de sucre, et qui présente au moins un motif décoratif.

Des produits chocolatés présentant un motif sur leur surface existent déjà. Il s'agit par exemple du produit commercialisé par la Société LU sous la marque « PIM'S », variété cerise.

Ces produits, réalisés par un procédé traditionnel, ont pour inconvénient que le motif n'est pas tout à fait satisfaisant.

Les défauts susceptibles de se produire sont les suivants :
- irrégularité d'épaisseur du motif
- interruption(s) non désirée(s) des lignes constituant le motif, ce qui fait qu'il n'est pas possible de réaliser à volonté un motif continu ou discontinu
- finition non totalement satisfaisante sur le plan esthétique.

En outre, les procédés traditionnels ne s'appliquent qu'à des surfaces régulières.

Au moins un des inconvénients précités est évité à l'aide du procédé selon l'invention.

Le procédé est à cet effet caractérisé en ce qu'il comporte :
a) projeter sous pression des gouttelettes d'une composition à base de matière grasse et de sucre pour former par impression le motif décoratif
b) cristalliser le motif décoratif à une température inférieure ou égale à la température ambiante.

La région de surface à base de matière grasse et de sucre peut être en chocolat noir, en chocolat blanc, en chocolat au lait, en chocolat à la noix de coco, en chocolat aux amandes et/ou aux noisettes et/ou au caramel, ou bien encore en pâte à glacer.

Ladite composition à base de matière grasse et de sucre peut être choisie parmi le chocolat noir, le chocolat blanc, le chocolat au lait, le chocolat à la noix de coco, le chocolat aux noisettes et/ou aux amandes et/ou au caramel, et la pâte à glacer.

Ladite composition à base de matière grasse et de sucre présente avantageusement une viscosité comprise entre 2 et 5 poises à 40°C, mesurée selon la méthode Casson. Elle représente de préférence une limite d'écoulement inférieure ou égale à 30 dynes/cm², telle que mesurée à l'aide d'un Rhéomat 115.

Les gouttelettes sont avantageusement projetées à une température comprise entre 25°C et 50°C.

Ladite région de surface présente avantageusement une température comprise entre 10°C et 30°C.

L'épaisseur du motif est généralement comprise entre 0,05 mm et 3 mm. Elle peut être comprise entre 0,01 mm et 1 mm, ou bien entre 0,05 mm et 0,5 mm, ou bien entre 0,05 mm et 0,3 mm, ou bien entre 0,05 mm et 0,2 mm, ou bien encore entre 0,05 mm et 0,1 mm.

Les gouttelettes peuvent en particulier être projetées à partir d'au moins deux buses de projection travaillant alternativement.

D'autres caractéristiques et avantages de l'invention apparaîtront mieux à la lecture de la description qui va suivre, donnée à titre d'exemple non limitatif, en liaison avec les dessins, dans lesquels :

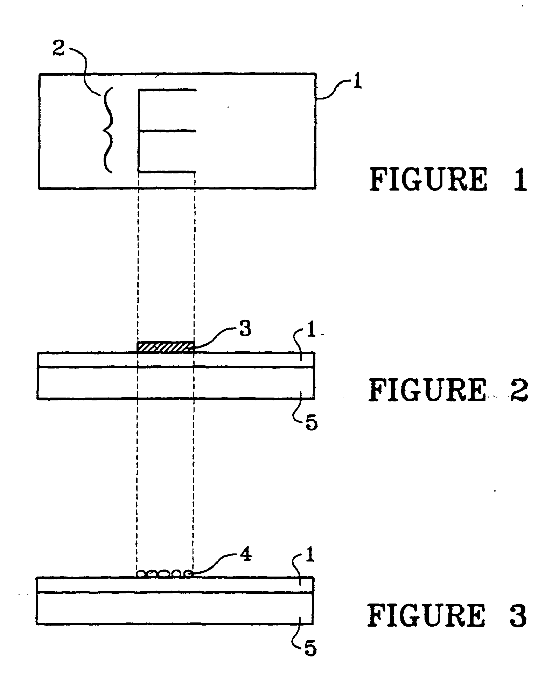

- la figure 1 est une vue générale d'un motif réalisé, selon l'invention, sur un produit chocolaté
- la figure 2 est une vue en coupe du produit de la figure 1
- la figure 3 illustre au plan microscopique une inscription réalisée selon l'invention.

Si l'on se réfère aux dessins, le produit est composé d'un support 1 sur lequel est imprimé un motif 2, d'épaisseur 3, constitué de fines gouttelettes 4.

Le support 1 peut avoir une surface convexe, concave, présentant ou non des irrégularités. Sa température peut être comprise entre 10°C et 30°C. Il peut être choisi parmi des chocolats normaux, chocolat au lait, chocolat blanc, chocolats spéciaux, avec noix de coco, amandes ou noisettes ou caramel, chocolats fantaisie (pâte à glacer), ou tout autre mélange de sucres et de matières grasses.

Le support 1 peut être une région superficielle recouvrant un support 5, par exemple un biscuit.

Le motif 2 qui peut contenir des arômes peut utiliser des matières premières choisies parmi les chocolats blanc, noir ou au lait ou les chocolats fantaisie (pâte à glacer), ou tous autres mélanges à base de sucres et/ou de matière grasse, notamment une composition telle qu'un fondant.

La température de dépose de ces matières premières d'impression peut être comprise entre 25°C et 50°C, le paramètres rhéologiques se caractérisant par des valeurs comprises entre 2 à 5 poises pour la viscosité (méthode Casson, 40°C) et maximum de 30 dynes/cm² (Rhéomat 115) pour la limite d'écoulement.

L'épaisseur 3 du motif 2 peut être avantageusement comprise entre 0,05 mm et 3 mm. Elle est répétable et modulable en fonction de la régularité du support 1, du style de motif 2, de la matière utilisée pour l'impression. Il est possible de réaliser le motif en une ou plusieurs passes, pour obtenir l'épaisseur désirée.

Les caractéristiques de l'invention sont déterminées par un motif 2 d'épaisseur 3 présentant une ligne d'apparence continue, réalisée à partir de fines gouttelettes 4, de diamètre et d'épaisseur répétable, dont le choix est déterminé à partir des paramètres technologiques, en fonction du support d'impression 1.

Après projection des gouttelettes 4, le motif est cristallisé, soit qu'on le laisse refroidir à température ambiante, soit qu'on le refroidisse en dessous de cette température, par exemple dans un tunnel de froid.

Lors de la projection, les gouttelettes émises par la ou les buses, à une température généralement comprise entre 25°C et 50°C se refroidissent superficiellement au cours de leur trajet (qui est en pratique de l'ordre de quelques mm à 1 ou 2 cm). Les vitesses de projection sont celles qui sont habituellement utilisées dans la technique dite d'impression par jet d'encre.

Si la technique d'impression s'apparente à l'impression par jet d'encre, la fonctionnalité est ici différente : la chaleur accumulée dans les gouttelettes et la vitesse d'impact permettent à celles-ci de s'accrocher facilement à la région de surface 1. Il est souhaitable que s'opère une fusion très localisée de la région de surface 1, pour faciliter l'accrochage du motif. Pour un diamètre et une composition des gouttelettes donnés, une température donnée de la région de surface, et une vitesse de projection donnée, l'accrochage est d'autant meilleur que la température des gouttelettes est plus élevée. Il est donc facile d'ajuster la température des gouttelettes pour obtenir un bon accrochage. On remarquera en particulier que, si une température trop faible risque de procurer un mauvais accrochage, une température trop élevée est de nature à détériorer l'aspect de la surface, en raison du fait qu'une fusion trop importante de la surface à revêtir risque de se produire, et qu'une déformation de la surface risque de s'ensuivre, sous l'impact des gouttelettes.

Le diamètre des gouttelettes peut être de l'ordre de 0,1 mm à 0,5 mm, étant entendu que l'impact des gouttelettes projetées tend à les étaler sur la surface et ce d'autant plus que leur température est plus élevée, et donc leur viscosité plus faible, lors de l'impact.

Le procédé de fabrication de ce produit peut comporter les étapes suivantes :
a) on place le produit chocolaté sur une bande transporteuse se déplaçant à vitesse industrielle
b) on imprime à l'aide d'un système maintenu sous pression, à l'aide de différentes vannes travaillant alternativement, par projection de gouttelettes ayant une taille et une vitesse données, un produit chocolaté à surface cristallisée. L'impression se fait sans contact direct du support avec le dispositif d'impression
c) on refroidit le produit imprimé dans une tunnel de froid pour cristalliser le motif imprimé.

Le motif d'impression est par exemple un dessin ou un texte formé de lignes qui sont ou non continues mais qui sont dépourvues de défaut d'interruption.

On notera que des gouttelettes présentant différentes compositions peuvent être pulvérisées en séquence de manière à former des surfaces colorées, en particulier en utilisant des compositions de couleurs différentes.

## Revendications

1. Procédé de réalisation par projection d'au moins un motif décoratif sur au moins une région de surface cristallisée, à base de matière grasse et de sucre, d'un produit alimentaire, **caractérisé en ce qu'**il comporte :
a) projeter sous pression à une température comprise entre 25°C et 50°C sur ladite région de surface, des gouttelettes d'une composition à base de matière grasse et/ou de sucre, présentant une viscosité comprise entre 2 et 5 poises à 40°C, mesurée selon la méthode Casson, pour former une impression réalisant ledit motif décoratif
b) cristalliser le motif décoratif à une température inférieure ou égale à la température ambiante.

2. Procédé selon la revendication 1, **caractérisé en ce que** la région de surface à base de matière grasse et de sucre est en chocolat noir ou en chocolat blanc, ou en chocolat au lait, ou en chocolat à la noix de coco ou en chocolat aux amandes et/ou aux noisettes et/ou au caramel, ou bien encore en pâte à glacer.

3. Procédé selon une des revendications 1 ou 2, **caractérisé en ce que** ladite composition à base de matière grasse et/ou de sucre est choisie parmi le chocolat noir, le chocolat blanc, le chocolat au lait, le chocolat à la noix de coco, le chocolat aux noisettes et/ou aux amandes et/ou au caramel, et la pâte à glacer.

4. Procédé selon une des revendications 1 à 3, **caractérisé en ce que** ladite composition présente une limite d'écoulement inférieure ou égale à 30 dynes/cm², telle que mesurée avec un Rhéomat 115.

5. Procédé selon une des revendications précédentes, **caractérisé en ce que** ladite région de surface présente une température comprise entre 10°C et 30°C.

6. Procédé selon une des revendications précédentes, **caractérisé en ce que** l'épaisseur dudit motif est comprise entre 0,05mm et 3mm.

7. Procédé selon une des revendications précédentes, **caractérisé en ce que** les gouttelettes sont projetées à partir d'au moins deux buses de projection travaillant alternativement.

## Claims

1. Method for producing by spraying at least one decorative pattern on at least one crystallized surface region, based on fats and sugar, of a food product, **characterized in that** it comprises:
a) spraying under pressure at a temperature of between 25° C and 50°C on the said surface region, droplets of a composition based on fats and/or sugar, having a viscosity of between 2 and 5 poise at 40°C, measured according to the Casson method, in order to form an impression producing the decorative pattern.
b) crystallizing the decorative pattern at a temperature below or equal to ambient temperature.

2. Method according to Claim 1, **characterized in that** the surface region based on fats and/or sugar is made of dark chocolate or white chocolate, or milk chocolate, or chocolate with coconut, or chocolate with hazelnuts and/or almonds and/or caramel, or furthermore icing paste.

3. Method according to either of Claims 1 or 2, **characterized in that** the said composition based on fats and/or sugar is chosen from dark chocolate, white chocolate, milk chocolate, chocolate with coconut, chocolate with hazelnuts and/or almonds and/or caramel, and icing paste.

4. Method according to one of Claims 1 or 3, **characterized in that** the said composition has a lower flow limit below or equal to 30 dynes/cm², as measured with a Rheomat 115.

5. Method according to one of the preceding claims, **characterized in that** the said surface region has a temperature of between 10°C and 30°C.

6. Method according to one of the preceding claims, **characterized in that** the thickness of the said pattern lies between 0.05 mm and 3 mm.

7. Method according to one of the preceding claims, **characterized in that** the droplet are sprayed from at least two spray nozzles working alternately.

## Patentansprüche

1. Verfahren zur Herstellung eines Nahrungsmittelproduktes durch Aufsprühen mindestens eines Verzierungsmusters auf mindestens einen Bereich einer auskristallisierten Oberfläche auf der Basis von Fett und Zucker, **dadurch gekennzeichnet, daß** es aufweist:
a) Aufsprühen unter Druck bei einer Temperatur von zwischen 25°C und 50°C auf den genannten Oberflächenbereich von Tröpfchen einer Zusammenset-zung auf der Basis von Fett und/oder Zucker, welche eine mit dem Casson-Verfahren gemessene Viskosität von zwischen 2 und 5 Poise bei 40°C besitzt, zum Ausbilden eines Aufdrucks, welcher das Verzierungsmuster bildet;
b) Auskristallisieren des Verzierungsmusters bei einer Temperatur unter oder gleich der Umgebungstemperatur.

2. Verfahren nach Anspruch 1, **dadurch gekennzeichnet, daß** der Oberflächenbereich auf der Basis von Fett und Zucker aus schwarzer Schokolade oder weißer Schokolade oder Milchschokolade oder Schokolade mit Kokosnuß oder Schokolade mit Mandeln und/oder mit Haselnüssen und/oder mit Karamel, oder aus Glasurmasse besteht.

3. Verfahren nach einem der Ansprüche 1 oder 2, **dadurch gekennzeichnet, daß** die Zusammensetzung auf der Basis von Fett und/oder Zucker aus schwarzer Schokolade, weißer Schokolade, Milchschokolade, Schokolade mit Kokosnuß, Schokolade mit Haselnüssen und/oder Mandeln und/oder Karamel, sowie Glasunnasse ausgewählt wird.

4. Verfahren nach einem der Ansprüche 1 bis 3, **dadurch gekennzeichnet, daß** die Zusammensetzung eine mit einem Rheomat 115 gemessene Fließgrenze von weniger als oder gleich 30 dyn/cm2 besitzt.

5. Verfahren nach einem der vorhergehenden Ansprüche, **dadurch gekennzeichnet, daß** der Oberflächenbereich eine Temperatur von zwischen 10°C und 30°C aufweist.

6. Verfahren nach einem der vorhergehenden Ansprüche, **dadurch gekennzeichnet, daß** die Dicke des Musters zwischen 0,05 mm und 3 mm beträgt.

7. Verfahren nach einem der vorhergehenden Ansprüche, **dadurch gekennzeichnet, daß** die Tröpfchen aus mindestens zwei abwechselnd arbeitenden Sprühdüsen versprüht werden.
